# EUROPEAN PATENT APPLICATION

(11) **EP 4 838 584 A1**
(43) Date of publication of application: **11.11.2026**
(21) Application number: 25305641.0
(22) Date of filing: 06.05.2025
(51) Int. Cl.: H01M 4/62, H01M 10/052

(54) **BINDER FOR LI-ION SECONDARY BATTERIES**

(71) Applicant: ARKEMA FRANCE, 92800 Puteaux (FR)
(72) Inventor: OLARTE LOPEZ, Marco, PIERRE-BENITE (FR); ABRAMS, Michael, KING OF PRUSSIA (US); YANG, LEI, KING OF PRUSSIA (US)
(74) Representative: Arkema Patent

(57) **Abstract**

The present invention relates to a binder for Li-ion secondary battery comprising a blend of poly(vinylidene fluoride) and a hydrophilic polymer.

## Description

### Field of the invention

This invention relates to blends of fluoropolymer and hydrophilic polymers for uses a binder in electrodes in electrochemical devices.

### Background of the invention

VDF based Fluoropolymers, PVDF and its copolymers, are used as binder in electrodes or coating in separator in electrochemical devices such as lithium-ion batteries. Most common use of PVDF in lithium-ion battery are as binder for cathode, and sometimes it is also used as binder for anode. Yet another use of PVDF in lithium-ion battery is as coating layer on separators. For binder application, one key property is the adhesion/cohesion of the composite electrode structure. The typical cathode in lithium-ion battery is a composite porous structure consisting of active material, conductive carbon additive and binder, coated on to aluminum foil. The adhesion/cohesion of the composite electrode can be characterized by 180° peel test.

Active materials for lithium-ion battery cathode can be lithium cobalt oxide, lithium iron phosphate, lithium manganese oxide, lithium nickel-manganese-cobalt oxide, lithium nickel-cobalt-aluminum oxide, etc. Active materials usually account for greater than 90% by weight of the cathode composite. Conductive carbon additive can be carbon black, carbon fiber, carbon nanotube, graphite, graphene, etc. its main function is to provide conductive network for electrons, and its proportion in cathode composite is usually 0.5-5 wt %.

In a typical cathode of lithium-ion battery, PVDF or its copolymers are the main binder used in industry. The binder composition in cathode is typically in 0.5-5 wt %. One key requirement for the binder is to impart sufficient adhesion/cohesion in the composite electrode structure.

High molecular weight (MW) polyvinylidene fluoride (PVDF)-containing materials are excellent candidates for battery binders, in particular battery cathode binders. However, the bonding adhesion from PVDF-containing materials still needs to be improved. It is known from WO 2017/089683 a binder for lithium-ion battery comprising a blend of PVDF and an acrylic copolymer. The combination of PVDF with the acrylic copolymer allows an improvement of the adhesion.

However, other requirements are important such as the stability overtime of the slurry used to prepare the electrode. The ionic resistance is also a requirement that need to be assessed to determine the efficiency of the electrode. There is still a need for binders improving the slurry stability and minimizing variations in electrode ionic resistance due to temperature changes. The present invention provides a binder that solve at least part of the problems addressed above.

### Summary of the invention

The present invention relates to a binder for Li-ion secondary battery comprising a blend of at least one fluorinated polymer **P1** and at least one hydrophilic polymer **P2** characterized in that said fluorinated polymer **P1** has a melt viscosity between 4000 Pa.s and 6000 Pa.s measured according to ASTM D3885 at 232°C and a shear rate of 100 s⁻¹ and a 6% solution of said fluorinated polymer **P1** in N-methyl-2-pyrrolidone has a viscosity greater than 2000 mPa.s, measured at 23°C and a shear rate of 1 s⁻¹.

The selection of a specific fluorinated polymer, preferably vinylidene fluoride polymer, having a particular melt viscosity and a particular solution viscosity allows to improve the stability of an electrode composition while minimizing the variation in ionic resistance of the electrode produced therefrom.

In a preferred embodiment, said fluorinated polymer **P1** comprises recurring units derived from vinylidene fluoride and
i) optionally comprises recurring units derived from a fluorinated monomer **M1a** selected from the group consisting of hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)ₙCH₂OCF=CF₂ wherein n is 1, 2, 3, 4 or 5; a monomer of formula R¹CH₂OCF=CF₂ wherein R¹ is hydrogen atom or F(CF₂)m and m is 1, 2, 3 or 4; a monomer of formula R²OCF=CH₂ wherein R2 is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluoromethyl-3,3,3-trifluoro-1-propene or mixture thereof ;
ii) optionally comprises recurring units derived from a monomer **M1b** of formula R^{a}R^{b}C=C(R^{b})((X¹)ₚC(O)R^{d}) wherein the substituents R^{a}, R^{b} and R^{c} are independently selected from the group consisting of H, CO₂H et C₁-C₅ alkyl ; R^{d} is selected from the group consisting of -NHC(CH₃)₂CH₂C(O)CH₃ and -OR^{d'} wherein R^{d'} is selected from the group consisting of H and C₁-C₁₈ alkyl optionally substituted by one or more functional groups -OH, -CO₂H, -SO₃H, -OC(O)R^{d"}, -C(O)O-R^{d"} or a heterocycle having five or six membered ring comprising at least one nitrogen atom in the ring ; R^{d"} being selected from the group consisting of C₁-C₆ alkyl and C₆-C₁₂ aryl optionally substituted by one or more functional groups -OH, -CO₂H, -SO₃H ; p is 0 or 1 ; X¹ is selected from the group consisting of -[-C(O)OC(R^{a'})(R^{b'})C(R^{c'})(R^{d'})-]_{w1}- and C₁-C₁₀ alkyl optionally substituted by one or more functional groups -OH, -CO₂H or ester(s) ; w1 is an integer of from 1 to 50, advantageously from 1 to 25, preferably from 1 to 10, in particular from 1 to 5 ; R^{a'}, R^{b'}, R^{c'}, R^{d'} are independently from each other and independently for each unit w1 selected from the group consisting of H and C₁-C₅ alkyl.

In a preferred embodiment, said hydrophilic polymer **P2** comprises recurring units derived from a monomer **M2a** of formula R³R⁴C=C(R⁵)C(O)R⁶ (I) wherein R³, R⁴ and R⁵ are independently selected from the group consisting of H and C₁-C₅ alkyl ; R⁶ is -OR⁷ wherein R⁷ is selected from the group consisting of C₁-C₁₈ alkyl optionally substituted by one or more -OH, -CO₂H, -SO₃H, -OC(O)R⁸, -C(O)O-R⁸ or a five- to six-membered heterocycle comprising at least nitrogen atom in the ring ; R⁸ being selected from the group consisting of C₁-C₆ alkyl and C₆-C₁₂ aryl optionally substituted with one or more -OH, -CO₂H, -SO₃H functional group(s).

In a preferred embodiment, said hydrophilic polymer **P2** comprises recurring units derived from a monomer **M2b** selected from the group consisting of monomers of formula (II), (III), (IV), (V), (VI), (VII), (VIII)

R¹⁰R¹¹C=C(R¹²)C(O)OH (II)

R¹³R¹⁴C=C(R¹⁵)(OC(O)R¹⁶) (III);

R¹⁷R¹³C=CR¹⁹C(O)OC(O)CR²⁰=CR²¹R²² (IV) ;

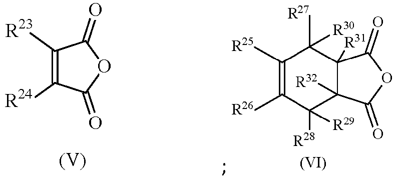

R³³R³⁴C=CR³⁵(CN) (VII) ;

R³⁶R³⁷C=CR³⁸(C(O)NR³⁹R⁴⁰) (VIII);

wherein R¹⁰, R¹¹ and R¹² are independently selected from the group consisting of H, CO₂H and C₁-C₅ alkyl;
R¹³, R¹⁴ and R¹⁵ are independently selected from the group consisting of H and C₁-C₅ alkyl ;
R¹⁶ is C₁-C₅ alkyl ;
R¹⁷, R¹⁸, R¹⁹, R²⁰, R²¹, R²², R²³, R²⁴, R²⁵, R²⁶, R²⁷, R²⁸, R²⁹, R³⁰, R³¹, R³², R³³, R³⁴, R³⁵, R³⁶, R³⁷ and R³⁸ are independently selected from the group consisting of H and C₁-C₅ alkyl ;
R³⁹ and R⁴⁰ are independently selected from the group consisting of H and C₁-C₁₀ alkyl optionally substituted by one or more functional groups -OH, -CO₂H, SO₃H, -C(O)OR⁴¹, -OC(O)R⁴¹ ; R⁴¹ is selected from the group consisting of C₁-C₅ alkyl and C₆-C₁₂ aryl optionally substituted by one or more functional group CO₂H.

In a preferred embodiment, said hydrophilic polymer **P2** comprises at least 60 mol% of recurring units derived from a monomer **M2a** as defined in the present invention, at least 1 mol% of recurring units derived from a monomer **M2b** of formula (II) and optionally at most 39 mol% of recurring units derived from a monomer **M2b** of formula (III), (V), (VI), (VII) or (VIII).

In a preferred embodiment, said fluorinated polymer **P1** has a melt viscosity between 4500 Pa.s and 5500 Pa.s measured according to ASTM D3885 at 232°C and a shear rate of 100 s⁻¹.

In a preferred embodiment, the 6% solution of said fluorinated polymer **P1** in N-methyl-2-pyrrolidone has a viscosity greater than 2500 mPa.s, measured at 23°C and a shear rate of 1 s⁻¹.

In a preferred embodiment, said hydrophilic polymer **P2** has weight average molecular weight Mw greater than 30000 g/mol, advantageously greater than 40000 g/mol, preferably greater than 50000 g/mol, more preferably greater than 65000 g/mol, in particular greater than 80000 g/mol, more particularly greater than 100000 g/mol.

In a preferred embodiment, the **P1/P2** mass ratio may vary from 95/5 to 50/50, advantageously from 95/5 to 60/40.

In another aspect, the present invention provides an electrode-forming composition for Li-ion secondary battery comprising the binder according to the present invention, an active material and optionally a conductive agent.

In another aspect, the present invention provides an electrode for Li-ion secondary battery comprising a current collector, at least one side of said current collector being coated with the electrode-forming composition according to the present invention.

In another aspect, the present invention provides Li-ion secondary battery comprising an anode, a cathode and a separator, wherein said anode or said cathode is an electrode according to the present invention.

### Detailed description of the invention

The invention is now described in more detail and in a nonlimiting way in the description which follows. According to various implementations, said binder comprises the following features, in combination where appropriate. The contents indicated are expressed by weight, unless otherwise indicated. For all the indicated ranges, the limits are included unless otherwise indicated.

In a first aspect, the present invention provides a binder for Li-ion secondary battery. The binder comprises a blend of a fluorinated polymer **P1** and a hydrophilic polymer **P2.** The mass ratio of the fluorinated polymer **P1** to the hydrophilic polymer **P2** may vary from 99/1 to 50/50, advantageously from 95/5 to 50/50, preferably from 95/5 to 55/45, more preferably from 95/5 to 60/40, in particular from 95/5 to 65/35, more particularly from 95/5 to 70/30, most particularly from 95/5 to 75/25.

The binder is preferably prepared by mixing or blending a latex solution of said fluorinated polymer **P1** with a latex solution of said hydrophilic polymer **P2** to form the blend thereof.

### Fluorinated polymer P1

Said fluorinated polymer **P1** comprises recurring units derived from a vinyl monomer bearing at least one fluorine atom.

Preferably, said fluorinated polymer **P1** comprise recurring units derived from vinylidene fluoride. Preferably, said fluorinated polymer **P1** may comprise recurring units derived from a monomer **M1a** copolymerizable with vinylidene fluoride. Comonomers compatible with vinylidene fluoride may be halogenated (fluorinated, chlorinated or brominated) or non-halogenated. Said monomer **M1a** may be selected from the group consisting of hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)ₙCH₂OCF=CF₂ wherein n is 1, 2, 3, 4 or 5; a monomer of formula R¹CH₂OCF=CF₂ wherein R¹ is hydrogen atom or F(CF₂)m and m is 1, 2, 3 or 4; a monomer of formula R²OCF=CH₂ wherein R² is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluoromethyl-3,3,3-trifluoro-1-propene or mixture thereof. Among the trifluoropropenes mention may be mentioned 3,3,3-trifluoropropene. Among the tetrafluoropropenes include 2,3,3,3-tetrafluoropropene, 1,3,3,3-tetrafluoropropene. Among the pentafluoropropene include 1,1,3,3,3-pentafluoropropene or 1,2,3,3,3-pentafluoropropene. Chlorofluoroethylene may refer to either 1-chloro-1-fluoroethylene or 1-chloro-2-fluoroethylene. The isomer 1-chloro-1-fluoroethylene is preferred. Chlorotrifluoropropene is preferably 1-chloro-3,3,3-trifluoropropene or 2-chloro-3,3,3-trifluoropropene.

Advantageously, said monomer **M1a** may be selected from the group consisting of vinyl fluoride, trifluoroethylene, chlorotrifluoroethylene, 1,2-difluoroethylene, tetrafluoroethylene, hexafluoropropylene, perfluoro(alkyl vinyl) ethers such as perfluoro(methyl vinyl)ether (PMVE), perfluoro(ethyl vinyl) ether (PEVE) and perfluoro(propyl vinyl) ether (PPVE); perfluoro(1,3-dioxole) perfluoro(2,2-dimethyl-1,3-dioxole) (PDD), perfluorobutyl ethylene (PFBE), trifluoropropene, tetrafluoropropene, hexafluoroisobutylene, perfluorobutylethylene, pentafluoropropene, bromotrifluoroethylene, chlorofluoroethylene, chlorotrifluoropropene and 2-trifluoromethyl-3,3,3-trifluoro-1-propene or a mixture thereof.

Preferably, said monomer **M1a** may be selected from the group consisting of vinyl fluoride, trifluoroethylene, chlorotrifluoroethylene, 1,2-difluoroethylene, tetrafluoroethylene, hexafluoropropylene, perfluoro(alkyl vinyl) ethers such as perfluoro(methyl vinyl)ether (PMVE), perfluoro(ethyl vinyl) ether (PEVE) and perfluoro(propyl vinyl) ether (PPVE); perfluorobutyl ethylene (PFBE), trifluoropropene, tetrafluoropropene, hexafluoroisobutylene, perfluorobutylethylene, pentafluoropropene, bromotrifluoroethylene, chlorofluoroethylene and chlorotrifluoropropene or a mixture thereof.

More preferably, said monomer **M1a** may be selected from the group consisting of vinyl fluoride, trifluoroethylene, chlorotrifluoroethylene, 1,2-difluoroethylene, tetrafluoroethylene, hexafluoropropylene, perfluoro (methyl vinyl) ether, perfluoro (ethyl vinyl) ether, perfluoro (propyl vinyl) ether, perfluorobutyl ethylene, trifluoropropene, tetrafluoropropene, hexafluoroisobutylene, perfluorobutylethylene, pentafluoropropene, bromotrifluoroethylene, chlorofluoroethylene and chlorotrifluoropropene or a mixture thereof.

In particular, said monomer **M1a** may be selected from the group consisting of vinyl fluoride, trifluoroethylene, chlorotrifluoroethylene, 1,2-difluoroethylene, tetrafluoroethylene and hexafluoropropylene or a mixture thereof. More particularly, said monomer **M1a** is hexafluoropropylene. According to one embodiment, in said fluorinated polymer **P1,** the mass content of units derived from vinylidene fluoride is preferably at least 50%, preferably at least 60%, more preferably greater than 70% and particularly greater than 80% based on the total weight of said fluorinated polymer **P1.** Thus, the mass content of said monomer **M1a** in said fluorinated polymer **P1** is lower than 50%, preferably lower than 40%, preferably lower than 30%, more preferably lower than 20% based on the total weight of said fluorinated polymer **P1.** According to a preferred embodiment, the mass content of said monomer **M1a** in said fluorinated polymer **P1** is between 0.5% and 20%, advantageously between 0.5% and 19%, preferably between 0.5% and 18%, more preferably between 0.5% and 17%, in particular between 0.5% and 16%, more particularly between 0.5% and 15% based on the total weight of said fluorinated polymer **P1.** The mass content of said monomer **M1a** in said fluorinated polymer **P1** may also be between 1% and 20%, advantageously between 1% and 19%, preferably between 1% and 18%, more preferably between 1% and 17%, most preferably between 1% and 16%, in particular between 1% and 15%, more particularly between 1% and 13%, most particularly between 1% and 11% based on the total weight of said fluorinated polymer **P1.** The mass content of said monomer **M1a** in said fluorinated polymer **P1** may also be between 2% and 20%, advantageously between 2% and 19%, preferably between 2% and 18%, more preferably between 2% and 17%, most preferably between 2% and 16%, in particular between 2% and 15%, more particularly between 2% and 13%, most particularly between 2% and 11% based on the total weight of said fluorinated polymer **P1.** The mass content of said monomer **M1a** in said fluorinated polymer **P1** may also be between 3% and 20%, advantageously between 3% and 19%, preferably between 3% and 18%, more preferably between 3% and 17%, most preferably between 3% and 16%, in particular between 3% and 15%, more particularly between 3% and 13%, most particularly between 3% and 11% based on the total weight of said fluorinated polymer **P1.** The mass content of said monomer **M1a** in said fluorinated polymer **P1** may also be between 4% and 20%, advantageously between 4% and 19%, preferably between 4% and 18%, more preferably between 4% and 17%, most preferably between 4% and 16%, in particular between 4% and 15%, more particularly between 4% and 13%, most particularly between 4% and 11% based on the total weight of said fluorinated polymer **P1.**

Said fluorinated polymer **P1** may comprise recurring units derived from a monomer **M1b**. Preferably, said monomer **M1b** may be present in a content of 0.05% by mol to 5% by mol, in particular from 0.05 to 2% in said fluorinated polymer **P1.** Said monomer **M1b** of formula R^{a}R^{b}C=C(R^{b})((X¹)ₚC(O)R^{d}) wherein the substituents R^{a}, R^{b} and R^{c} are independently selected from the group consisting of H, CO₂H et C₁-C₅ alkyl ; R^{d} is selected from the group consisting of -NHC(CH₃)₂CH₂C(O)CH₃ and -OR^{d'} wherein R^{d'} is selected from the group consisting of H and C₁-C₁₈ alkyl optionally substituted by one or more functional groups -OH, - CO₂H, -SO₃H, -OC(O)Rd^{"}, -C(O)O-R^{d"} or a heterocycle having five or six membered ring comprising at least one nitrogen atom in the ring ; R^{d"} being selected from the group consisting of C₁-C₆ alkyl and C₆-C₁₂ aryl optionally substituted by one or more functional groups -OH, -CO₂H, -SO₃H ; p is 0 or 1; X¹ is selected from the group consisting of -[-C(O)OC(R^{a'})(R^{b'})C(R^{c'})R^{d'})-]_{w1}- and C₁-C₁₀ alkyl optionally substituted by one or more functional groups -OH, -CO₂H or ester(s) ; w1 is an integer of from 1 to 50, advantageously from 1 to 25, preferably from 1 to 10, in particular from 1 to 5 ; R^{a'}, R^{b'}, R^{c'}, R^{d'} are independently from each other and independently for each unit w1 selected from the group consisting of H and C₁-C₅ alkyl.

Said heterocycle can be saturated or unsaturated or aromatic. Said heterocycle can be monocyclic or bicyclic. Said heterocycle can be a pyrrole, pyrrolidine, pyridine, piperidine, pyrimidine, pyrazine, 1,4-dihydropyridine, indole, oxindole, isatine, quinoline, isoquinoline, quinazoline, imidazoline, pyrazolidine, 2-pyrrolidone, deltalactam, succinimide, 2-imidazolidinone, 4-imidazolidinone. Said heterocycle can be substituted by one or more C₁-C₅ alkyl groups. As mentioned above, C₁-C₁₈ alkyl group is optionally substituted by said heterocycle. The latter can be linked to the alkyl chain by the nitrogen atom or any other atom forming the heterocycle. Preferably the heterocycle is 2-pyrrolidone, delta-lactam, succinimide, 2-imidazolidinone, 4-imidazolidinone.

Said monomer **M1b** may be of formula R^{a}R^{b}C=C(R^{b})((X¹)ₚC(O)R^{d}) wherein the substituents R^{a}, R^{b} and R^{c} are independently selected from the group consisting of H, CO₂H et C₁-C₅ alkyl ; R^{d} is selected from the group consisting of -NHC(CH₃)₂CH₂C(O)CH₃ and -OR^{d'} wherein R^{d'} is selected from the group consisting of H and C₁-C₁₈ alkyl optionally substituted by one or more functional groups -OH, -CO₂H, -SO₃H, -OC(O)R^{d"}, -C(O)OR^{d"} or a heterocycle having five or six membered ring comprising at least one nitrogen atom in the ring ; R^{d"} being selected from the group consisting of C₁-C₆ alkyl and C₆-C₁₂ aryl optionally substituted by one or more functional groups -OH, -CO₂H, -SO₃H ; p is 0 or 1 ; X¹ is selected from the group consisting of -[-C(O)OC(R^{a'})(R^{b'})C(R^{c'})(R^{d'})-]_{w1}- and C₁-C₁₀ alkyl optionally substituted by one or more functional groups - OH, -CO₂H or ester(s) ; w1 is an integer of from 1 to 50, advantageously from 1 to 25, preferably from 1 to 10, in particular from 1 to 5 ; R^{a'}, R^{b'}, R^{c'}, R^{d'} are independently from each other and independently for each unit w1 selected from the group consisting of H and C₁-C₅ alkyl. Preferably, said monomer **M1b** may be of formula R^{a}R^{b}C=C(R^{c})((X¹)ₚC(O)R^{d}) wherein the substituents R^{a}, R^{b} and R^{c} are independently selected from the group consisting of H, CO₂H and C₁-C₅ alkyl ; R^{d} is -OR^{d'} with R^{d'} selected from the group consisting of H and C₁-C₁₀ alkyl optionally substituted by one or more functional groups -OH, -CO₂H, -SO₃H, -OC(O)R^{d"}, or -C(O)O-R^{d"} ; R^{d"} being selected from the group consisting of C₁-C₆ alkyl or C₆-C₁₂ aryl optionally substituted by one or more functional groups -OH, -CO₂H, -SO₃H ; p is 0 or 1 ; X¹ is selected from the group consisting of -[-C(O)OC(R^{a'})(R^{b'})C(R^{c'})(R^{d'})-]_{w1}- and C₁-C₁₀ alkyl optionally bearing one or more functional groups -OH, -CO₂H or ester(s) ; with w1 being an integer of from 1 to 50, advantageously of from 1 to 25, preferably of from 1 to 10, in particular of from 1 to 5 ; R^{a'}, R^{b'}, R^{c'}, R^{c'} are independently from each other and independently for each unit w1, selected from the group consisting of H and C₁-C₅ alkyl. More preferably, said monomer **M1b** may be of formula R^{a}R^{b}C=C(R^{c})((X¹)ₚC(O)R^{d}) wherein the substituents R^{a}, R^{b} and R^{c} are independently selected from the group consisting of H, CO₂H et C₁-C₅ alkyl ; R^{d} is -OR^{d'} with R^{d'} selected from the group consisting of H and C₁-C₁₀ alkyl optionally substituted by one or more functional groups -OH, -CO₂H, -SO₃H, -OC(O)R^{d"}, or -C(O)O-R^{d"} ; R^{d"} being selected from the group consisting of C₁-C₆ alkyl or C₆-C₁₂ aryl optionally substituted by one or more functional groups -OH, -CO₂H, -SO₃H. In particular, said monomer **M1b** may be of formula R^{a}R^{b}C=C(R^{c})(C(O)R^{d}) wherein the substituents R^{a}, R^{b} and R^{c} are independently selected from the group consisting of H, CO₂H et C₁-C₃ alkyl; R^{d} is -OR^{d'} with R^{d'} selected from the group consisting of H and C₁-C₅ alkyl optionally substituted by one or more functional groups -OH, -CO₂H, -SO₃H, -OC(O)R^{d"}, or -C(O)O-R^{d"} ; R^{d"} being selected from the group consisting of C₁-C₆ alkyl or C₆-C₁₂ aryl optionally substituted by one or more functional groups -OH, -CO₂H, -SO₃H. More particularly, said monomer **M1b** may be acrylic acid, methyl acrylate, ethyl acrylate, propyl acrylate, n-butyl acrylate, isobutyl acrylate, t-butyl acrylate, n-dodecyl acrylate, amyl acrylate, isoamyl acrylate, hexyl acrylate, 2-ethylhexyl acrylate, diacetone acrylamide, lauryl acrylate, n-octyl acrylate, hydroxypropyl methacrylate, hydroxybutyl methacrylate, hydroxyethyl methacrylate, hydroxyethyl acrylate, acrylate hydroxypropyl acrylate, hydroxybutyl acrylate, methacrylic acid, methyl methacrylate, ethyl methacrylate, propyl methacrylate, n-butyl methacrylate, isobutyl methacrylate, t-butyl methacrylate, n-dodecyl methacrylate, amyl methacrylate, isoamyl methacrylate, hexyl methacrylate, 2-ethylhexyl methacrylate, lauryl methacrylate, n-octyl methacrylate, ureido methacrylate, monomers of formula CH₂=CH(CO₂CH₂CH₂CO₂H), CH₂=CH(CO₂CH₂CH₂-O-C(O)-CH₂CH₂CO₂H), CH₂=CH(CO₂CH₂CH₂CH₂-O-C(O)-CH₂CH₂CO₂H), CH₂=CH(CO₂CH(CH₃)CH₂-O-C(O)-CH₂CH₂CO₂H),CH₂=CH(CO₂CH₂CH₂-O-C(O)-C₆H₄CO₂H), CH₂=CH(CO₂CH₂CH₂CH₂CH(CO₂H)CH₂CH₂CO₂H) ; and mixtures thereof. Said fluorinated polymer **P1** may comprise one or more recurring units derived from said monomer **M1b** as defined herein.

In a particular embodiment, said fluorinated polymer P1 comprises recurring units derived from vinylidene fluoride, recurring units derived from monomer **M1b,** and optionally recurring units derived from said monomer **M1a**; said monomer **M1a** and **M1b** being as defined above. For example, said fluorinated polymer P1 may comprise recurring units derived from vinylidene fluoride, recurring units derived from said monomer **M1b** being selected from the group consisting of acrylic acid, methyl acrylate, ethyl acrylate, propyl acrylate, hydroxypropyl methacrylate, hydroxyethyl methacrylate, hydroxyethyl acrylate, hydroxypropyl acrylate, methacrylic acid, methyl methacrylate, ethyl methacrylate, propyl methacrylate, monomers of formula CH₂=CH(CO₂CH₂CH₂CO₂H), CH₂=CH(CO₂CH₂CH₂-O-C(O)-CH₂CH₂CO₂H), CH₂=CH(CO₂CH₂CH₂CH₂-O-C(O)-CH₂CH₂CO₂H), CH₂=CH(CO₂CH(CH₃)CH₂-O-C(O)-CH₂CH₂CO₂H),CH₂=CH(CO₂CH₂CH₂-O-C(O)-CₛH₄CO₂H), CH₂=CH(CO₂CH₂CH₂CH₂CH(CO₂H)CH₂CH₂CO₂H), and mixtures thereof ; and optionally recurring units derived from said monomer **M1a** being hexafluoropropylene.

Said fluorinated polymer **P1** may comprise a functional group selected from the group consisting of carboxylic acid, carboxylic acid anhydride, carboxylic acid esters, epoxy groups, amide, hydroxyl, carbonyl, mercapto, sulfide, oxazoline, phenolics, ester, ether, siloxane, sulfonic, sulfuric, phosphoric, or phosphonic; preferably selected from the group consisting of carboxylic acid, carboxylic acid anhydride, carboxylic acid esters, epoxy groups, hydroxyl, carbonyl, mercapto, sulfide, ester, ether, sulfonic, phosphoric or phosphonic. Functional groups may improve adhesion on metal. The functional group may be introduced within the polymer chain by grafting or copolymerization with a monomer (for example with monomer **M1b** as disclosed above). According to another embodiment, the functional group may be introduced within the polymer chain via a chain transfer agent used during the polymerization process. The chain transfer agent may be a polymer with a molecular weight lower than or equal to 20000 g/mol and bearing functional groups selected from the group consisting of: carboxylic acid, carboxylic acid anhydride, carboxylic acid esters, epoxy groups (such as glycidyl), amide, hydroxyl, carbonyl, mercapto, sulfide, sulfide, oxazoline, phenolics, ester, ether, siloxane, sulfonic, sulfuric, phosphoric, phosphonic. An example of such chain transfer agent is acrylic acid oligomers. According to a preferred embodiment, the chain transfer agent is an acrylic acid oligomer with a molecular weight lower than or equal to 20000 g/mol. Alternatively, the functional group may be introduced by an oligomeric or polymeric component comprising said functional group and mixed with the fluorinated polymer **P1.** The oligomeric or polymeric component may be impregnated in, mixed with, or intimately mixed with the fluorinated polymer P1. In this case, the functional group may be derived from a (meth)acrylic acid compound selected from acrylic acid, methacrylic acid, methyl (meth)acrylate, ethyl (meth)acrylate, hydroxyethyl(meth)acrylate, hydroxypropyl(meth)acrylate, hydroxybutyl(meth)acrylate, hydroxyethylhexyl(meth)acrylate, and acryloyloxy propylsuccinate. For example, the functional group may be an oligomer or polymer comprising repeating units from a monomer selected from the group consisting of acrylic acid, methacrylic acid, methyl (meth)acrylate, ethyl (meth)acrylate, hydroxyethyl(meth)acrylate, hydroxypropyl(meth)acrylate, hydroxybutyl(meth)acrylate, hydroxyethylhexyl(meth)acrylate, acryloyloxyethylsuccinate, and acryloyloxy propylsuccinate. Said oligomer or polymer has an average molecular weight by weight lower than or equal to 100000 g/mol, advantageously lower than 80000 g/mol, preferably lower than 60000 g/mol, more preferentially lower than 40000 g/mol, in particular lower than 20000 g/mol. The average molecular weight is determined by GPC using a Waters 2695e device coupled with a Wyatt NEON refractometer equipped with two PL Gel mixed C columns and a guard column (7.8 mm I.D. × 30 cm, 5 µm) under the following conditions: Temperature: 35°C; Flow rate: 1.0 mL/min; injection volume: 100 µL. Samples are prepared at a concentration of 1 mg/ml in THF. Twelve samples of poly(methylmethacrylate) with a molecular weight of 535 to 2,210,000 g/mol are used as the calibration standard. Said oligomer or polymer is preferably added during the production process of the fluorinated polymer **P1.** The content in functional groups content is at least 0.01% molar, preferably at least 0.1% molar, and not more than 15% molar, preferably not more than 10% molar.

Said fluorinated polymer **P1** of the present invention can be obtained by known polymerization methods for example emulsion or suspension polymerization. According to a preferred embodiment, said fluorinated polymer **P1** is prepared by an emulsion polymerization process in the presence of a non-fluorinated surfactant. Thus, said fluorinated polymer **P1** may comprise between 10 ppm and 2% by weight of a non-fluorinated surfactant comprising polyethylene glycol or polypropylene glycol segments. Preferably, the non-fluorinated surfactant has an HLB value of 1 to 20, in particular an HLB value of 1 to 5 or 10 to 15. In particular, the non-fluorinated surfactant comprises at least one polyethylene glycol segment and at least one polypropylene glycol segment, and has an HLB value of 1 to 5 and an average molecular weight by weight of 5000 to 10000 g.mol-1. Alternatively, said surfactant comprises at least one segment of polyethylene glycol and at least one segment of polypropylene glycol, and has an HLB value of 10 to 15 and an average molecular weight by weight of 500 to 2500 g.mol-1. According to a preferred embodiment, said fluorinated polymer **P1** is prepared by a suspension polymerization process, preferably in the presence of a suspending such as polyvinyl alcohol (PVA) or a compound with a cellulose moiety such as methylcellulose, hydroxypropyl methylcellulose, carboxymethylcellulose.

As mentioned above, said fluorinated polymer **P1** has a particular particle size distribution. This allows to achieve the desired properties and to obtain a good compromise between adhesion and swelling.

Said fluorinated polymer **P1** may have a melt viscosity between 4000 Pa.s and 6000 Pa.s measured according to ASTM D3885 at 232°C and a shear rate of 100 s⁻¹. Preferably, said fluorinated polymer **P1** may have a melt viscosity between 4100 Pa.s and 5900 Pa.s measured according to ASTM D3885 at 232°C and a shear rate of 100 s⁻¹. More preferably, said fluorinated polymer **P1** may have a melt viscosity between 4200 Pa.s and 5800 Pa.s measured according to ASTM D3885 at 232°C and a shear rate of 100 s⁻¹. Most preferably, said fluorinated polymer **P1** may have a melt viscosity between 4300 Pa.s and 5700 Pa.s measured according to ASTM D3885 at 232°C and a shear rate of 100 s⁻¹. In particular, said fluorinated polymer **P1** may have a melt viscosity between 4400 Pa.s and 5600 Pa.s measured according to ASTM D3885 at 232°C and a shear rate of 100 s⁻¹. More particularly, said fluorinated polymer **P1** may have a melt viscosity between 4500 Pa.s and 5500 Pa.s measured according to ASTM D3885 at 232°C and a shear rate of 100 s⁻¹.

A 6% solution of said fluorinated polymer **P1** in N-methyl-2-pyrrolidone may have a viscosity greater than 2000 mPa.s, measured at 23°C and a shear rate of 1 s⁻¹. Preferably, a 6% solution of said fluorinated polymer **P1** in N-methyl-2-pyrrolidone has a viscosity greater than 2100 mPa.s, measured at 23°C and a shear rate of 1 s⁻¹. More preferably, a 6% solution of said fluorinated polymer **P1** in N-methyl-2-pyrrolidone has a viscosity greater than 2200 mPa.s, measured at 23°C and a shear rate of 1 s⁻¹. Most preferably, a 6% solution of said fluorinated polymer **P1** in N-methyl-2-pyrrolidone has a viscosity greater than 2300 mPa.s, measured at 23°C and a shear rate of 1 s⁻¹. In particular, a 6% solution of said fluorinated polymer **P1** in N-methyl-2-pyrrolidone has a viscosity greater than 2400 mPa.s, measured at 23°C and a shear rate of 1 s⁻¹. More particularly, a 6% solution of said fluorinated polymer **P1** in N-methyl-2-pyrrolidone has a viscosity greater than 2500 mPa.s, measured at 23°C and a shear rate of 1 s⁻¹.

The fluorinated polymer **P1** may have a melting temperature ranging from 130°C to 180°C, preferably from 135°C to 180°C, more preferably from 140°C to 180°C, most preferably from 145°C to 180°C, in particular from 150°C to 180°C measured by DSC according to the ASTM E794-06 (2018) standard test method.

In a preferred embodiment, the average particle size of the said fluorinated polymer **P1** is between 10 and 1000 nm. In another embodiment, the average particle size is between 1 µm and 200 µm, preferably from 1 µm to 100 µm. The average particle size is determined by laser particle size. A Malvern INSITEC System particle size analyzer is used for the measurement. This is carried out in the dry process by laser diffraction on a powder with a focal length of 100 mm.

According to certain embodiments, the vinylidene fluoride contained in the said fluorinated polymer **P1** is biosourced. The term "bio-based" means "from biomass". This improves the ecological footprint of the polymer. Bio-based VDF can be characterized by a renewable carbon content, i.e. carbon of natural origin and from a biomaterial or biomass, of at least 1% atomic as determined by the 14C content according to the NF EN 16640 standard. The term "renewable carbon" indicates that carbon is naturally occurring and comes from a biomaterial (or biomass), as shown below. According to some embodiments, the bio-carbon content of the VDF may be greater than 5%, preferably greater than 10%, preferably greater than 25%, preference greater than or equal to 33%, preferably greater than 50%, preference greater than or equal to 66%, preference greater than 75%, preference greater than 90%, preference greater than 95%, preferably greater than 98%, preferably greater than 99%, advantageously equal to 100%.

### Hydrophilic polymer P2

In the present invention, the binder comprises a hydrophilic polymer **P2.** Said hydrophilic polymer **P2** comprises recurring units derived from a monomer **M2a** of formula R³R⁴C=C(R⁵)C(O)R⁶ (I) wherein R³, R⁴ and R⁵ are independently selected from the group consisting of H and C₁-C₅ alkyl ; R⁶ is -OR⁷ wherein R⁷ is selected from the group consisting of C₁-C₁₈ alkyl optionally substituted by one or more -OH, -CO₂H, - SO₃H, -OC(O)R⁸, -C(O)O-R⁸ or a five- to six-membered heterocycle comprising at least nitrogen atom in the ring ; R⁸ being selected from the group consisting of C₁-C₆ alkyl and C₆-C₁₂ aryl optionally substituted with one or more -OH, -CO₂H, -SO₃H functional group(s). Preferably, said hydrophilic polymer **P2** comprises recurring units derived from a monomer **M2a** of formula R³R⁴C=C(R⁵)C(O)R⁶ (I) wherein R³, R⁴ and R⁵ are independently selected from the group consisting of H and C₁-C₅ alkyl ; R⁶ is -OR⁷ wherein R⁷ is selected from the group consisting of C₁-C₁₅ alkyl optionally substituted by one or more -OH, -CO₂H, -SO₃H, - OC(O)R⁸, -C(O)O-R⁸ or a five- to six-membered heterocycle comprising at least nitrogen atom in the ring ; R⁸ being selected from the group consisting of C₁-C₆ alkyl and C₆-C₁₀ aryl optionally substituted with one or more -OH, -CO₂H, -SO₃H functional group(s). More preferably, said hydrophilic polymer **P2** comprises recurring units derived from a monomer **M2a** of formula R³R⁴C=C(R⁵)C(O)R⁶ (I) wherein R³, R⁴ and R⁵ are independently selected from the group consisting of H and C₁-C₅ alkyl ; R⁶ is -OR⁷ wherein R⁷ is selected from the group consisting of C₁-C₁₀ alkyl optionally substituted by one or more -OH, -CO₂H, -SO₃H, - OC(O)R⁸, -C(O)O-R⁸ or a five- to six-membered heterocycle comprising at least nitrogen atom in the ring ; R⁸ being selected from the group consisting of C₁-C₅ alkyl and C₆ aryl optionally substituted with one or more -OH, -CO₂H, -SO₃H functional group(s). Most preferably, said hydrophilic polymer **P2** comprises recurring units derived from a monomer **M2a** of formula R³R⁴C=C(R⁵)C(O)R⁶ (I) wherein R³, R⁴ and R⁵ are independently selected from the group consisting of H and C₁-C₅ alkyl ; R⁶ is -OR⁷ wherein R⁷ is selected from the group consisting of C₁-C₅ alkyl optionally substituted by one or more -OH, -CO₂H, -SO₃H, - OC(O)R⁸, -C(O)O-R⁸ or a five- to six-membered heterocycle comprising at least nitrogen atom in the ring ; R⁸ being selected from the group consisting of C₁-C₅ alkyl optionally substituted with one or more -OH, - CO₂H, -SO₃H functional group(s). In particular, said hydrophilic polymer **P2** comprises recurring units derived from a monomer **M2a** of formula R³R⁴C=C(R⁶)C(O)R⁶ (I) wherein R³, R⁴ and R⁵ are independently selected from the group consisting of H and C₁-C₃ alkyl ; R⁶ is -OR⁷ wherein R⁷ is selected from the group consisting of C₁-C₃ alkyl optionally substituted by one or more -OH, -CO₂H, -SO₃H, -OC(O)R⁸, -C(O)O-R⁸ or a five- to six-membered heterocycle comprising at least nitrogen atom in the ring ; R⁸ being selected from the group consisting of C₁-C₃ alkyl optionally substituted with one or more -OH, -CO₂H, -SO₃H functional group(s).

Said hydrophilic polymer **P2** may further comprise recurring units derived from other monomers. Hence, the hydrophilic polymer **P2** comprises recurring units derived from a monomer **M2b** selected from the group consisting of monomers of formula (II), (III), (IV), (V), (VI), (VII), (VIII)

R¹⁰R¹¹C=C(R¹²)C(O)OH (II)

R¹³R¹⁴C=C(R¹⁵)(OC(O)R¹⁶) (III);

R¹⁷R¹³C=CR¹⁹C(O)OC(O)CR²⁰=CR²¹R²² (IV) ;

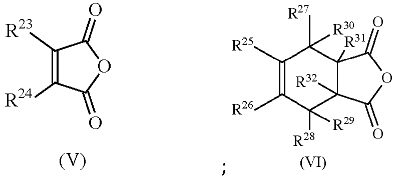

R³³R³⁴C=CR³⁵(CN) (VII);

R³⁶R³⁷C=CR³³(C(O)NR³⁹R⁴⁰) (VIII);

wherein R¹⁰, R¹¹ and R¹² are independently selected from the group consisting of H, CO₂H and C₁-C₅ alkyl;
R¹³, R¹⁴ and R¹⁵ are independently selected from the group consisting of H and C₁-C₅ alkyl ;
R¹⁶ is C₁-C₅ alkyl;
R¹⁷, R¹⁸, R¹⁹, R²⁰, R²¹, R²², R²³, R²⁴, R²⁵, R²⁶, R²⁷, R²⁸, R²⁹, R³⁰, R³¹, R³², R³³, R³⁴, R³⁵, R³⁶, R³⁷ and R³⁸ are independently selected from the group consisting of H and C₁-C₅ alkyl ;

R³⁹ and R⁴⁰ are independently selected from the group consisting of H and C₁-C₁₀ alkyl optionally substituted by one or more functional groups -OH, -CO₂H, SO₃H, -C(O)OR⁴¹, -OC(O)R⁴¹ ; R⁴¹ is selected from the group consisting of C₁-C₅ alkyl and C₆-C₁₂ aryl optionally substituted by one or more functional group CO₂H.

Preferably, the hydrophilic polymer **P2** comprises recurring units derived from a monomer **M2b** selected from the group consisting of monomers of formula (II), (III), (IV), (V), (VI), (VII), (VIII)

R¹⁰R¹¹C=C(R¹²)C(O)OH (II)

R¹³R¹⁴C=C(R¹³)(OC(O)R¹⁶) (III);

R¹⁷R¹³C=CR¹⁹C(O)OC(O)CR²⁰=CR²¹R²² (IV);

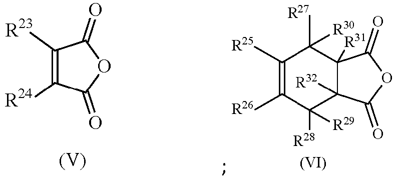

R³³R³⁴C=CR³⁵(CN) (VII);

R³⁶R³⁷C=CR³³(C(O)NR³⁹R⁴⁰ (VIII) ;

wherein R¹⁰ , R¹¹ and R¹² are independently selected from the group consisting of H, CO₂H and C₁-C₅ alkyl;
R¹³, R¹⁴ and R¹⁵ are independently selected from the group consisting of H and C₁-C₅ alkyl ;
R¹⁶ is C₁-C₅ alkyl ;
R¹⁷, R¹⁸, R¹⁹, R²⁰, R²¹, R²², R²³, R²⁴, R²⁵, R²⁶, R²⁷, R²⁸, R²⁹, R³⁰, R³¹, R³², R³³, R³⁴, R³⁵, R³⁶, R³⁷ and R³⁸ are independently selected from the group consisting of H and C₁-C₅ alkyl ;

R³⁹ and R⁴⁰ are independently selected from the group consisting of H and C₁-C₅ alkyl optionally substituted by one or more functional groups -OH, -CO₂H, SO₃H, -C(O)OR⁴¹, -OC(O)R⁴¹ ; R⁴¹ is selected from the group consisting of C₁-C₅ alkyl and C₆ aryl optionally substituted by one or more functional group CO₂H.

More preferably, the hydrophilic polymer **P2** comprises recurring units derived from a monomer **M2b** selected from the group consisting of monomers of formula (II), (III), (V), (VI), (VII),

R¹⁰R¹¹C=C(R¹²)C(O)OH (II)

R¹³R¹⁴C=C(R¹³)(OC(O)R¹⁶) (III);

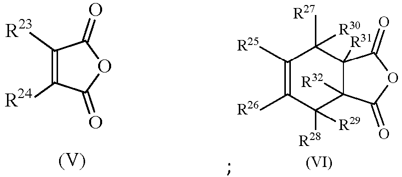

R³³R³⁴C=CR³³(CN) (VII);

wherein R¹⁰, R¹¹ and R¹² are independently selected from the group consisting of H, CO₂H and C₁-C₅ alkyl ;
R¹³, R¹⁴ and R¹⁵ are independently selected from the group consisting of H and C₁-C₅ alkyl ;
R¹⁶ is C₁-C₅ alkyl ;
R¹⁷, R¹⁸, R¹⁹, R²³, R²⁴, R²⁵, R²⁶, R²⁷, R²⁸, R²⁹, R³⁰, R³¹, R³², R³³, R³⁴ and R³⁵ are independently selected from the group consisting of H and C₁-C₅ alkyl.

Most preferably, the hydrophilic polymer **P2** comprises recurring units derived from a monomer **M2b** selected from the group consisting of monomers of formula (II), (V), (VI),

R¹⁰R¹¹C=C(R¹²)C(O)OH (II)

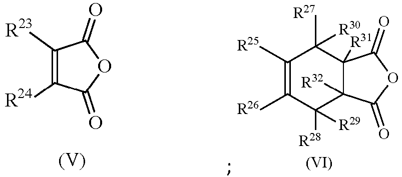

wherein R¹⁰, R¹¹ and R¹² are independently selected from the group consisting of H, CO₂H and C₁-C₅ alkyl ;
R²³, R²⁴, R²⁵, R²⁶, R²⁷, R²⁸, R²⁹, R³⁰, R³¹ and R³² are independently selected from the group consisting of H and C₁-C₅ alkyl.

Said hydrophilic polymer **P2** may comprise at least 60 mol% of recurring units derived from a monomer **M2a** as defined in the present invention, at least 1 mol% of recurring units derived from a monomer **M2b** of formula (II) and optionally at most 39 mol% of recurring units derived from a monomer **M2b** of formula (III), (V), (VI), (VII) or (VIII). Preferably, said hydrophilic polymer **P2** may comprise at least 70 mol% of recurring units derived from a monomer **M2a** as defined in the present invention, at least 3 mol% of recurring units derived from a monomer **M2b** of formula (II) and optionally at most 27 mol% of recurring units derived from a monomer **M2b** of formula (III), (V), (VI), (VII) or (VIII). More preferably, said hydrophilic polymer **P2** may comprise at least 80 mol% of recurring units derived from a monomer **M2a** as defined in the present invention, at least 5 mol% of recurring units derived from a monomer **M2b** of formula (II) and optionally at most 15 mol% of recurring units derived from a monomer **M2b** of formula (III), (V), (VI), (VII) or (VIII). Most preferably, said hydrophilic polymer **P2** may comprise at least 85 mol% of recurring units derived from a monomer **M2a** as defined in the present invention, at least 5 mol% of recurring units derived from a monomer **M2b** of formula (II) and optionally at most 10 mol% of recurring units derived from a monomer **M2b** of formula (III), (V), (VI), (VII) or (VIII).

In particular, said hydrophilic polymer **P2** may comprise at least 85 mol% of recurring units derived from a monomer **M2a** as defined in the present invention, at most 15 mol% of recurring units derived from a monomer **M2b** of formula (II) and optionally at most 5 mol% of recurring units derived from a monomer **M2b** of formula (III), (V), (VI), (VII) or (VIII). More particularly, said hydrophilic polymer **P2** may comprise at least 85 mol% of recurring units derived from a monomer **M2a** as defined in the present invention, at most 15 mol% of recurring units derived from a monomer **M2b** of formula (II).

Said hydrophilic polymer **P2** may have weight average molecular weight Mw greater than 30000 g/mol, advantageously greater than 40000 g/mol, preferably greater than 50000 g/mol, more preferably greater than 65000 g/mol, in particular greater than 80000 g/mol, more particularly greater than 100000 g/mol. The average molecular weight is determined by GPC using a Waters 2695e device coupled with a Wyatt NEON refractometer equipped with two PL Gel mixed C columns and a guard column (7.8 mm I.D. × 30 cm, 5 µm) under the following conditions: Temperature: 35°C; Flow rate: 1.0 mL/min; injection volume: 100 µL. Samples are prepared at a concentration of 1 mg/ml in THF. Twelve samples of poly(methylmethacrylate) with a molecular weight of 535 to 2,210,000 g/mol are used as the calibration standard.

Said hydrophilic polymer **P2** may have a glass transition temperature lower than 230°C, advantageously lower than 220°C, preferably lower than 210°C, more preferably lower than 200°C, most preferably lower than 190°C, in particular lower than 180°C. Said hydrophilic polymer **P2** may have a glass transition temperature greater than 60°C, advantageously lower than 70°C, preferably lower than 80°C, more preferably lower than 90°C, most preferably lower than 100°C, in particular lower than 110°C.

The glass transition temperatures shown here are determined using Fox's equation. The Fox equation is an equation used to predict the glass transition temperature of statistical copolymers: 1 / Tg,copo ≈ Σi ωi / Tg,i ; Tg,copo is the glass transition temperature of the copolymer ; Tg,i are those of the homopolymers i corresponding to each comonomer; ωi are the mass fractions of the monomers i composing this copolymer. Mass fractions are expressed in units. Glass transition temperatures are expressed in degrees Kelvin. The temperature is then converted to degrees Celsius.

Electrode-forming composition & electrode prepared therefrom.

In another aspect of the present invention an electrode-forming composition is provided. The electrode-forming composition is suitable for use in the preparation of electrodes for electrochemical devices. Preferably, the electrode-forming composition comprises at least one electrode active material, a binder composition according to the present invention, and optionally at least one conductive agent.

In a preferred embodiment, the electrode-forming composition has the following mass composition:
a. 50% to 99.95% electrode active material, preferably 50% to 99%,
b. 0% to 25% conductive agent, preferably 0.5% to 25%,
c. 0.05% to 25% of said binder depending on the invention, preferably 0.5% to 25%,
d. 0% to 25% of at least one additive selected from the group consisting of a plasticizer, an ionic liquid, a dispersing agent for a conductive additive, and a flow aid, preferably 0% to 5%;
the sum of all these percentages being 100%.

The conductive agents in the electrode are composed of one or more materials that can improve conductivity. Some examples include carbon blacks such as acetylene black, Ketjen black; carbon fibers, such as carbon nanotube, carbon nanofiber, vapor phase growth carbon fiber; metal powders such as SUS (steel use stainless) powder, or aluminum powder.

The electrode active materials in electrode compositions are materials that are capable of storing and releasing lithium ions.

In particular, for a negative electrode (i.e. anode), that electrode active material is selected from the group consisting of a lithium alloy, lithium metal, a metal oxide, a carbon material such as graphite or hard carbon, silicon and its derivatives SiOx, silicone, graphite-silicon composite, a silicon alloy and Li₄Ti₅O₁₂ or a mixture thereof. The shape of the negative electrode active material is not particularly limited but is preferably particulate.

In particular, for a positive electrode (i.e. cathode), said electrode active material is selected from the group consisting of LiCoO₂, Li(Ni, Co, Al)O₂, Li₍₁₊ₓ₎NiₐMn_{b}Co_{c} (x represents a real number of 0 or more, a = 0.9, 0.8, 0.6, 0.5, or 1/3, b = 0.05, 0.1, 0.2, 0.3, or 1/3, c = 0.05, 0.1, 0.2, or 1/3), LiNiO₂, LiMn₂O₄, LiCoMnO₄, Li₃NiMn₃O₃, Li₃Fe₂(PO₄)₃, Li₃V₂(PO₄)₃, a spinel Li Mn substituted by a different element having a composition represented by Li₁₊ₓMn_{2-x-y}M_{y}O₄, M representing at least one metal chosen from Al, Mg, Co, Fe, Ni, and Zn, x and y independently representing a real number between 0 and 2, lithium titanate LiₓTiO_{y} - x and y independently representing a real number between 0 and 2, and a lithium metal phosphate having a composition represented by LiMPO₄, with M representing Fe, Mn, Co, or Ni. The shape of the positive electrode active material is not particularly limited but is preferably particulate. In addition, the surface of each of the materials described above can be coated. The coating material is not particularly limited as long as it has lithium-ion conductivity and contains a material that can be held in the form of a coating layer on the surface of the active material. Examples of the coating material include LiNbO₃, Li₄Ti₅O₁₂, and Li₃PO₄.

The electrode can be prepared by a process comprising the following steps:
A) providing an electrode-forming composition comprising the binder composition according to the present invention; at least one electrode active material and a solvent and optionally, at least one electrically conductive additive;
B) providing a metallic substrate with at least one surface;
C) Applying the electrode-forming composition provided in step a) to said at least one surface of the metallic substrate provided in step B), thereby providing an assembly comprising a metal substrate coated with said electrode-forming composition on at least one surface; and
D) drying of the assembly provided for in step C) to form the electrode.

The present invention provides an electrode for Li-ion secondary battery comprising a current collector, at least one side of said current collector being coated with the electrode-forming composition according to the present invention.

The present invention provides a Li-ion secondary battery comprising an anode, a cathode and a separator, wherein said anode or said cathode is an electrode according to the present invention.

### Example

### Polymers used in the examples.

Polymer P1a: homopolymer of vinylidene fluoride having solution viscosity of 2745 cP (6% solution in NMP measured at 23°C and a shear rate of 1 s⁻¹) and a melt viscosity of 46.9 kP at 232° C and 100 s⁻¹.

Polymer P1b: homopolymer of vinylidene fluoride having solution viscosity of 6651 cP (6% solution in NMP measured at 23°C and a shear rate of 1 s⁻¹) and a melt viscosity of 53.3 kP at 232° C and 100 s⁻¹.

Polymer P1c: homopolymer of vinylidene fluoride having solution viscosity greater than 100 cP (6% solution in NMP measured at 23°C and a shear rate of 1 s⁻¹) and a melt viscosity greater than 75 kP at 232° C and 100 s⁻¹.

Polymer 1d: Copolymer of vinylidene fluoride and acrylic acid (1 mol% of acrylic acid) having solution viscosity of 1445cP (6% solution in NMP measured at 23°C and a shear rate of 1 s⁻¹) and a melt viscosity greater than 27 kP at 232° C and 100 s⁻¹.

Polymer P2 is a copolymer of methyl methacrylate and methacrylic acid in a molar ratio of 90/10. Polymer P3 is a polyacrylic acid.

### Preparation of the electrode-forming composition

The 8% binder solution in NMP was prepared the day before at a temperature of 50°C and left under low shear to ensure optimum homogeneity. The NMC slurry was prepared by mixing Imerys C65 carbon black (1.5 g) with the binder solution (18.75 g at 8% by weight in NMP). Next, NMC811 (97.5 g) was added to the mixture. This mixture was subjected to a planetary mixing phase followed by a dispersion phase to obtain the composition. A target viscosity value of 5 Pa.s at a shear rate of 10 s⁻¹ was defined. The electrodes were coated in a roll-to-roll coating line using a knife targeting a loading level of 22 mg/cm² and calendered to a density of 3.2 g/cm³.

### Method to measure viscosity and change in viscosity

Measurements were carried out in a dry room with a dew point of -40°C using a TA Instrument rheometer equipped with a standard 40 mm diameter spindle, with a plate spacing of approx. 500 mm. The viscosity measurement program was used to increase the shear rate from 0.1 to 100 s⁻¹. Viscosity was measured at tₒ and after ageing for 48 hours.

### Method to determine ionic resistance

The ionic resistance of the cathode electrode was measured using Electrochemical Impedance Spectroscopy (EIS) under blocking electrolyte conditions in a symmetrical system setup. The symmetrical cell was assembled with identical cathode electrodes as both the working and counter electrodes, and a non-reactive, blocking electrolyte (0.012 M TBAClO₄) to prevent charge transfer.

A sinusoidal AC voltage with an amplitude of 10 mV was applied over a frequency range from 100 kHz to 0.01 Hz. The impedance spectra were recorded using a potentiostat/galvanostat equipped with a frequency response analyzer. The data obtained were analyzed using a transmission line model (TLM) to interpret the impedance response. A thermal cycle was applied, starting at 25°C with steps every 5°C, then going up to 60°C with an equilibration time of 2 hours by step, and finally going down to 25°C.

### Method to determine the solution viscosity of the fluorinated polymer P1

Melt viscosity measured according to ASTM method D-3835 measured at 232°C and 100 sec- 1.

Solution viscosity measurements were carried out in a dry room with a dew point of -40°C using a TA Instrument rheometer equipped with a standard 40 mm diameter spindle, with a plate spacing of approx. 500 mm. The viscosity measurement program was used to increase the shear rate from 0.1 to 100 s⁻¹.

Various binders were studied, and their composition is detailed below in table 1. The change in slurry viscosity at 48h is also reported in table 1.

**[Table 1]**

| Examples | Polymer **P1** | Polymer **P2** | Mass Ratio **P1/P2** | Change in viscosity at 48h (10 s⁻¹) |
|---|---|---|---|---|
| Example 1 | P1a | P2 | 90/10 | 2% |
| Example 2 | P1b | P2 | 90/10 | 4% |
| Comparative example 3 | P1c | P3 | 99/1 | 160% |
| Comparative example 4 | P1d | - | 100/0 | 1% |

The ionic resistance was also evaluated according to the method disclosed above. The results are reported in table 2 below.

**[Table 2]**

| Examples | Ionic resistance change at 25°C after thermal cycle |
|---|---|
| Example 1 | 5% |
| Example 2 | 7% |
| Comparative example 3 | 16% |
| Comparative example 4 | 33% |

As demonstrated in the tables 1 and 2, the binders according to the present invention allow to improve the ionic resistance at high temperature while maintaining a change in viscosity acceptable.

## Claims

1. Binder for Li-ion secondary battery comprising a blend of at least one fluorinated polymer **P1** and at least one hydrophilic polymer **P2 characterized in that** said fluorinated polymer **P1** has a melt viscosity between 4000 Pa.s and 6000 Pa.s measured according to ASTM D3885 at 232°C and a shear rate of 100 s⁻¹ and a 6% solution of said fluorinated polymer **P1** in N-methyl-2-pyrrolidone has a viscosity greater than 2000 mPa.s, measured at 23°C and a shear rate of 1 s⁻¹.

2. Binder for Li-ion secondary battery according to the previous claim **characterized in that** said fluorinated polymer **P1** comprises recurring units derived from vinylidene fluoride and
i) Optionally comprises recurring units derived from a fluorinated monomer **M1a** selected from the group consisting of hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)ₙCH₂OCF=CF₂ wherein n is 1, 2, 3, 4 or 5; a monomer of formula R¹CH₂OCF=CF₂ wherein R¹ is hydrogen atom or F(CF₂)m and m is 1, 2, 3 or 4; a monomer of formula R²OCF=CH₂ wherein R2 is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluoromethyl-3,3,3-trifluoro-1-propene or mixture thereof ;
ii) optionally comprises recurring units derived from a monomer **M1b** of formula R^{a}R^{b}C=C(R^{b})((X¹)ₚC(O)R^{d}) wherein the substituents R^{a}, R^{b} and R^{c} are independently selected from the group consisting of H, CO₂H et C₁-C₅ alkyl ; R^{d} is selected from the group consisting of -NHC(CH₃)₂CH₂C(O)CH₃ and -OR^{d'} wherein R^{d'} is selected from the group consisting of H and C₁-C₁₈ alkyl optionally substituted by one or more functional groups -OH, -CO₂H, -SO₃H, -OC(O)R^{d"}, -C(O)O-R^{d"} or a heterocycle having five or six membered ring comprising at least one nitrogen atom in the ring ; R^{d"} being selected from the group consisting of C₁-C₆ alkyl and C₆-C₁₂ aryl optionally substituted by one or more functional groups -OH, -CO₂H, -SO₃H ; p is 0 or 1 ; X¹ is selected from the group consisting of -[-C(O)OC(R^{a'})(R^{b'})C(R^{c'})(R^{d'})-]_{w1}- and C₁-C₁₀ alkyl optionally substituted by one or more functional groups -OH, -CO₂H or ester(s) ; w1 is an integer of from 1 to 50, advantageously from 1 to 25, preferably from 1 to 10, in particular from 1 to 5 ; R^{a'}, R^{b'}, R^{c'}, R^{d'} are independently from each other and independently for each unit w1 selected from the group consisting of H and C₁-C₅ alkyl.

3. Binder for Li-ion secondary battery according to any one of the previous claims wherein said hydrophilic polymer **P2** comprises recurring units derived from a monomer **M2a** of formula R³R⁴C=C(R⁵)C(O)R⁶ (I) wherein R³, R⁴ and R⁵ are independently selected from the group consisting of H and C₁-C₅ alkyl ; R⁶ is -OR⁷ wherein R⁷ is selected from the group consisting of C₁-C₁₈ alkyl optionally substituted by one or more -OH, -CO₂H, -SO₃H, -OC(O)R⁸, -C(O)O-R⁸ or a five- to six-membered heterocycle comprising at least nitrogen atom in the ring ; R⁸ being selected from the group consisting of C₁-C₆ alkyl and C₆-C₁₂ aryl optionally substituted with one or more -OH, -CO₂H, -SO₃H functional group(s).

4. Binder for Li-ion secondary battery according to the any one of the previous claims wherein said hydrophilic polymer **P2** comprises recurring units derived from a monomer **M2b** selected from the group consisting of monomers of formula (II), (III), (IV), (V), (VI), (VII), (VIII)
R¹⁰R¹¹C=C(R¹²)C(O)OH (II)
R¹³R¹⁴C=C(R¹⁵)(OC(O)R¹⁶) (III);
R¹⁷R¹³C=CR¹⁹C(O)OC(O)CR²⁰=CR²¹R²² (IV); 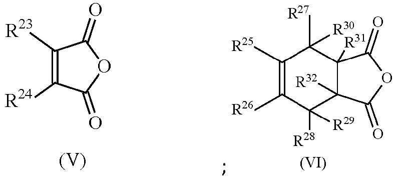
R³³R³⁴C=CR³³(CN) (VII);
R³⁶R³⁷C=CR³³(C(O)NR³⁹R⁴⁰) (VIII);
wherein R¹⁰, R¹¹ and R¹² are independently selected from the group consisting of H, CO₂H and C₁-C₅ alkyl;
R¹³, R¹⁴ and R¹⁵ are independently selected from the group consisting of H and C₁-C₅ alkyl ; R¹⁶ is C₁-C₅ alkyl ;
R¹⁷, R¹⁸, R¹⁹, R²⁰, R²¹, R²², R²³, R²⁴, R²⁵, R²⁶, R²⁷, R²⁸, R²⁹, R³⁰, R³¹, R³², R³³, R³⁴, R³⁵, R³⁶, R³⁷ and R³⁸ are independently selected from the group consisting of H and C₁-C₅ alkyl ;
R³⁹ and R⁴⁰ are independently selected from the group consisting of H and C₁-C₁₀ alkyl optionally substituted by one or more functional groups -OH, -CO₂H, SO₃H, -C(O)OR⁴¹, -OC(O)R⁴¹ ; R⁴¹ is selected from the group consisting of C₁-C₅ alkyl and C₆-C₁₂ aryl optionally substituted by one or more functional group CO₂H.

5. Binder for Li-ion secondary battery according to any one of the previous claims **characterized in that** said hydrophilic polymer **P2** comprises at least 60 mol% of recurring units derived from a monomer **M2a** as defined in claim 3, at least 1 mol% of recurring units derived from a monomer **M2b** of formula (II) and optionally at most 39 mol% of recurring units derived from a monomer **M2b** of formula (III), (V), (VI), (VII) or (VIII).

6. Binder for Li-ion secondary battery according to any one of the previous claims **characterized in that** said fluorinated polymer **P1** has a melt viscosity between 4500 Pa.s and 5500 Pa.s measured according to ASTM D3885 at 232°C and a shear rate of 100 s⁻¹.

7. Binder for Li-ion secondary battery according to any one of the previous claims **characterized in that** a 6% solution of said fluorinated polymer **P1** in N-methyl-2-pyrrolidone has a viscosity greater than 2500 mPa.s, measured at 23°C and a shear rate of 1 s⁻¹.

8. Binder for Li-ion secondary battery according to any one of the previous claims **characterized in that** said hydrophilic polymer **P2** has weight average molecular weight Mw greater than 30000 g/mol, advantageously greater than 40000 g/mol, preferably greater than 50000 g/mol, more preferably greater than 65000 g/mol, in particular greater than 80000 g/mol, more particularly greater than 100000 g/mol.

9. Binder for Li-ion secondary battery according to any one of the previous claims **characterized in that** the **P1/P2** mass ratio may vary from 95/5 to 50/50, advantageously from 95/5 to 60/40.

10. Electrode-forming composition for Li-ion secondary battery comprising the binder according to any one of the previous claims, an active material and optionally a conductive agent.

11. Electrode for Li-ion secondary battery comprising a current collector, at least one side of said current collector being coated with the electrode-forming composition according to the previous claim.

12. Li-ion secondary battery comprising an anode, a cathode and a separator, wherein said anode or said cathode is an electrode according to the previous claim.
